# EUROPÄISCHE PATENTANMELDUNG

(11) **EP 0 902 243 A1**
(43) Veröffentlichungstag der Anmeldung: **17.03.1999**
(21) Anmeldenummer: 98116732.3
(22) Anmeldetag: 03.09.1998
(51) Int. Cl.: F25D 3/00

(54) **Eisspeicher-Element**

(30) Priorität: 09.09.1997 DE 19739389
(71) Anmelder: WEBASTO THERMOSYSTEME GmbH, D-82131 Stockdorf (DE)
(72) Erfinder: Forsthuber, Wolfgang, Dr., 82216 Maisach-Gernlinden (DE); Krompass, Andreas, 81375 München (DE); Hammerschmid, Günther, 82065 Buchenhain (DE)
(74) Vertreter: Wiese, Gerhard

(57) **Zusammenfassung**

Die Erfindung betrifft ein Eisspeicher-Element (28) mit einem von einer Außenwand (37) umgebenen Profilkörper (29B) zur Bildung wenigstens eines Speicherraums (34) für ein Eisspeicher-Medium, das in wärmetauschende Verbindung mit einem Kältemittel bringbar ist. Für eine kostengünstigere Gestaltung eines derartigen Eisspeicher-Elements und einem verbesserten Wärmeübergang ist erfindungsgemäß vorgesehen, daß in den aus Metall gebildeten Profilkörper (29B) wenigstens ein Kältemittelrohr (30) integriert ist. Der Profilkörper (29 B) ist vorzugsweise als Alu-Strangpressprofil mit integrierten Innenrippen (33) und Außenrippen (31, 32) ausgebildet.

## Beschreibung

Die Erfindung betrifft ein Eisspeicher-Element mit einem von einer Außenwand umgebenen Profilkörper zur Bildung wenigstens eines Speicherraums für ein Eisspeicher-Medium, das in wärmetauschende Verbindung mit einem Kältemittel bringbar ist.

Bei einem aus der DE 35 31 158 A1 bekannten Eisspeicher-Element besteht das Gehäuse aus einem Polyäthylen-Hohlprofil, in welches metallische Kältemittel-Rohrleitungen eingeschoben und gegenüber den Wandungen durch zusätzliche Halteteile fixiert werden. Der Wärmeübergang vom Kältespeicher-Medium im Inneren des Gehäuses zu der außen vorbeistreichenden Luft ist aufgrund des Kunststoffgehäuses schlecht. Die Kältemittel-Rohrleitungen müssen in aufwendiger Weise mit zusätzlichen Bauteilen fixiert werden, wodurch ein derartiges Element teuer in der Herstellung ist.

Der vorliegenden Erfindung liegt die Aufgabe zugrunde, ein Eisspeicher-Element zu schaffen, das kostengünstig herstellbar ist und über einen guten Wärmeübergang verfügt.

Diese Aufgabe wird dadurch gelöst, daß in einem aus Metall gebildeten Profilkörper wenigstens ein Kältemittelrohr integriert ist. Vorteilhafte Ausgestaltungen der Erfindung sind den Unteransprüchen zu entnehmen.

Durch die Integration des Kältemittelrohres in den Profilkörner ist zum einen eine kostengünstige Herstellung des Profilkörpers, beispielsweise als Leichtmetall-Strangpreßprofil möglich. Zum anderen ist aufgrund der metallischen Wandungen ein ausgezeichneter Wärmeübergang sowohl vom Kältemittelrohr zum Kältespeicher-Medium als auch von diesem durch die Außenwand an dort vorbeistreichende Luft möglich.

Der Wärmeübergang wird dadurch weiter verbessert, daß sich vom Kältemittelrohr auch Innenrippen in den Speicherraum hinein erstrecken.

Insbesondere bei einer rechteckigen Außenkontur eines Eisspeicher-Elements ist es vorteilhaft, wenn der Profilkörper wenigstens zwei Kältemittelrohre in einer symmetrischen Anordnung aufweist. Dabei können die vom Kältemittelrohr ausgehenden Innenrippen vorzugsweise ebenfalls eine symmetrische Anordnung aufweisen.

Zur Verbesserung des Wärmeübergangs vom Eisspeicher-Medium zu der an den Außenwänden des Profilkörpers vorbeistreichenden zu kühlenden Luft ist es vorteilhaft, wenn sich von der Außenwand des Protilkörpers Außenrippen nach außen erstrecken, die zumindestens teilweise zur Begrenzung von Luftkanälen dienen. Derartige Außenrippen weisen vorzugsweise Verbindungselemente zur Verbindung mit benachbarten Eisspeicher-Elementen auf, so daß mehrere Eisspeicher-Elemente in einfacher Weise zu einer selbsttragenden Eisspeicher-Baueinheit verbindbar sind. Dabei sind in einer besonders bevorzugten Ausführungsform die Außenrippen zum einen Teil als stegförmige Rippen und zu einem anderen Teil als gabelförmige Rippen ausgebildet, die jeweils paarweise mit den Rippen eines benachbarten Eisspeicher-Elements in einen formschlüssigen Eingriff bringbar sind.

Als wirksamer Schutz gegen eine Rißbildung in der Außenwand ist es bei Befüllung des Eisspeicher-Elements mit einem sich beim Phasenübergang/Einfrieren ausdehnenden Eisspeicher-Medium vorteilhaft, wenn in den Profilkörper ein volumen-kompensierendes Element mit eingebunden ist. Ein derartiger Kompensator kann beispielsweise von einem mit Luft gefüllten Hohlkörper oder einem geschlossenzelligen Schaumkörper oder einem anderen gummielastischen Element gebildet werden.

Gemäß einer besonders bevorzugten Ausführungsform wird als Kältespeicher-Medium ein Gashydrat, d.h. eine Mischung von Wasser und verschiedenen Fluorkohlenwasserstoffen oder Kohlenwasserstoffen, verwendet, bei der während eines Phasenübergangs keine Expansion auftritt, so daß Kompensationselemente entfallen können. Wenn nachfolgend von Wasser gesprochen wird, sollen damit auch andere Speichermedien umfaßt sein.

Der Profilkörper des Eisspeicher-Elements ist bevorzugt stirnseitig von Bodenteilen verschlossen; die mit der Außenwand durch Schweißen, Löten oder Kleben, durch Preßsitz oder durch Schrauben mit Dichtung verbunden sind. Wenigstens eines der Bodenteile weist dabei bevorzugt eine Bohrung oder einen Anschlußstutzen für den Durchtritt des Kältemittels zum Kältemittelrohr auf.

Nachfolgend sind mehrere Ausführungsbeispiele der Erfindung anhand der Zeichnung beschrieben. Es zeigt:
- Fig. 1: eine schematische Ansicht einer Fahrerkabine eines Lastkraftwagens mit einer Kompressionskälteanlage und mehreren Eisspeicher-Baueinheiten,
- Fig. 2: einen Querschnitt durch eine Eisspeicher-Baueinheit mit mehreren Eisspeicher-Elementen,
- Fig. 3: eine vergrößerte Querschnittsdarstellung eines Eisspeicher-Elements mit rechteckigem Querschnitt, geraden Innenrippen und zwei Kältemittelrohren,
- Fig. 4: einen Teillängsschnitt durch ein Eisspeicher-Element im Bodenbereich,
- Fig. 5-7: drei weitere Varianten eines Eisspeicher-Elements mit unterschiedlich geformten Innenrippen und unterschiedlich angeordneten Kältemittelrohren.
- Fig. 8: einen Teilquerschnitt durch eine Eisspeicher-Baueinheit mit zylindrischen Eisspeicher-Elementen,
- Fig. 9: eine Variante zur Fig. 8,
- Fig. 10: eine weitere Variante mit außenliegenden Kältemittelrohren und
- Fig. 11: ein zur Fig. 10 passendes Bodenteil.

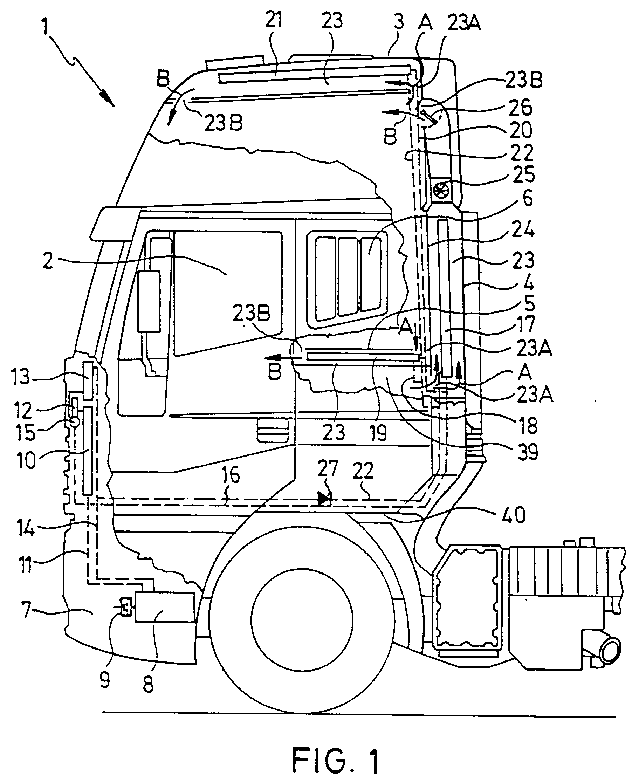

Im Austührungsbeispiel ist in Fig. 1 ein Teil eines Lastkraftwagens 1 dargestellt, bei dem innerhalb einer Fahrerkabine 2 ein Fahrzeuginnenraum ausgebildet ist. Die Fahrerkabine 2 wird nach oben von einem Dach 3 und nach hinten von einer Rückwand 4 begrenzt. Innerhalb des hinteren Teils der Kabine ist eine horizontale Trennwand 5 vorgesehen, wie sie als Liegefläche zur Aufteilung von Schlafkojen in einem Lastwagen des Fernverkehrs üblich ist, bei dem der hintere Teil der Fahrerkabine 2 als Schlafkabine 6 ausgebildet ist.

In einem Motorraum 7 des Lastkraftwagens 1 ist ein Kompressor 8 angeordnet, der mittels einer Magnetkupplung 9 mit einem nichtdargestellten Antriebsmotor des Fahrzeugs über Keilriemen verbindbar ist. Der Kompressor 8 ist in einen ersten Kältemittelkreislauf eingebunden, wobei er über eine Vorlaufleitung 11 mit einem Verflüssiger 10, einem Sammler 12 und einem erstem Verdampfer 13 mit Expansionsorgan verbunden ist. Das im ersten Kältemittelkreislauf kursierende Kältemittel wird vom ersten Verdampfer 13 über eine Rücklaufleitung 14 zum Kompressor 8 zurückgeleitet.

Zwischen Sammler 12 und erstem Verdampfer 13 ist ein Umschaltventil 15 vorgesehen, bei dem von der Vorlaufleitung 11 eine Zweig-Vorlaufleitung 16 abzweigt, die zu einem zweiten Kältemittelkreislauf gehört. In diesen zweiten Kältemittelkreislauf sind eine oder mehrere Eisspeicher-Baueinheiten integriert, welche jeweils aus einem zweiten Verdampfer mit Expansionsorgan und einem diesen umgebenden Eisspeicher bestehen. Eine erste Eisspeicher-Baueinheit 17 ist im Bereich der Rückwand 4 des Lastkraftwagens 1 angeordnet. Das über die Zweig-Vorlaufleitung 16 zuströmende Kältemittel kann über eine Zweigleitung 18 optional mittels eines weiteren nichtdargestellten Umschaltventiles zu einer zweiten Eisspeicher-Baueinheit 19 und einer dritten Eisspeicher-Baueinheit 21 geleitet werden. Die zweite Eisspeicher-Baueinheit 19 ist dabei in der horizontalen Trennwand 5 im Bereich der Schlafkabine 6 vorgesehen.

Die dritte Eisspeicher-Baueinheit 21 ist im Bereich des Daches 3 vorgesehen. Sie steht über eine weitere Zweigleitung 18 in Verbindung mit der Zweig-Vorlaufleitung 16 des Kältemittels. Die Eisspeicher-Baueinheiten 17, 19 bzw. 21 sind an eine gemeinsame Rücklaufleitung 22 angeschlossen, welche ihrerseits mit der Rücklaufleitung 14 des Kältemittels zum Kompressor 8 verbunden ist. Ein in der Rücklaufleitung 22 angeordnetes Rückschlagventil 27 unterbindet dabei das Zurückströmen von Kältemittelgas zu den Eisspeicher-Baueinheiten 17, 19 bzw. 21 und das dortige Auskondensieren.

Die Eisspeicher-Baueinheit 17 ist in einem Aufnahmeraum 23 angeordnet, welcher von der Rückwand 4 der Fahrerkabine 2 und einer davor mit Abstand angeordneten Zwischenwand 24 vorgesehen ist. Wahlweise kann die Eisspeicher-Baueinheit auch in einen Ausschnitt der Rückwand eingesetzt werden. Ebenso sind die optional oder alternativ vorgesehene Eisspeicher-Baueinheit 21 im Dachbereich und die weitere optional oder alternativ vorgesehene Eisspeicher-Baueinheit 19 im Bereich der horizontalen Trennwand 5 jeweils in einem Aufnahmeraum 23 vorgesehen, der durch eine Doppelwandigkeit hergestellt wird.

Die Aufnahmeräume 23 sind jeweils durch einen Eintritt 23 A und einen Austritt 23 B mit der Fahrerkabine 2 verbunden, so daß eine Luftströmung durch den doppelwandigen Aufnahmeraum 23 stattfinden kann. Diese Luftdurchströmung, die entweder durch Konvektion aufgrund der temperaturbedingten Dichteunterschiede der Luft in der Fahrerkabine 2 stattfindet oder aber durch ein optional vorgesehenes Gebläse 25 zwangsweise stattfindet, kann mittels eines Absperrorgans 26 geregelt werden. Das Absperrorgan 26 ist beispielsweise als schwenkbare Klappe ausgebildet, welche beispielhaft am oberen Ende des Aufnahmeraumes 23 für die Eisspeicher-Baueinheit 17 dargestellt ist. Die Klappe kann manuell oder motorisch betätigt werden und durch entsprechende andere Absperrorgane, wie verschiebbare Gitter oder Schieber ersetzt werden. Auch wenn dies in der Fig. 1 nicht dargestellt ist, versteht sich, daß auch die anderen Aufnahmeräume 23 für die Eisspeicher-Baueinheiten 19 bzw. 21 jeweils mit einem entsprechenden Absperrorgan und/oder einem Gebläse ausgestattet sein können. Durch den Eintritt 23 A strömt Luft entsprechend dem Pfeil A in den Aufnahmeraum 23, wird an der betreffenden Eisspeicher-Baueinheit 17, 19 bzw. 21 vorbeigeleitet und dabei abgekühlt und verläßt durch die Austrittöffnungen 23 B entsprechend dem Pfeil B als abgekühlte Luft die Aufnahmeräume 23 in Richtung zur Fahrerkabine 2.

Die Anlage ist vorzugsweise so ausgelegt, daß der Kompressor 8 genügend Leistung aufweist, um auch bei großem Kältebedarf während des Betriebes des Fahrzeugmotors nicht nur genügend Kälteleistung für den ersten Verdampfer 13 zur normalen Abkühlung der Fahrerkabine 2 während der Fahrt bereitzustellen, sondern zusätzlich einen oder mehrere der Eisspeicher-Baueinheiten 17, 19, 21 durch Umwandlung von Wasser in Eis aufzuladen, so daß bei einer anschließenden Pause durch eine einfache Durchströmung der betreffenden Aufnahmeräume 23 mit Luft eine Abkühlung der Fahrerkabine 2 erreicht werden kann. Hierdurch ist gewährleistet, daß der Fahrer während seiner Ruhe - bzw. Schlafpausen auch in wärmeren Ländern ein angenehmes Klima in der Fahrerkabine 2 vorfindet.

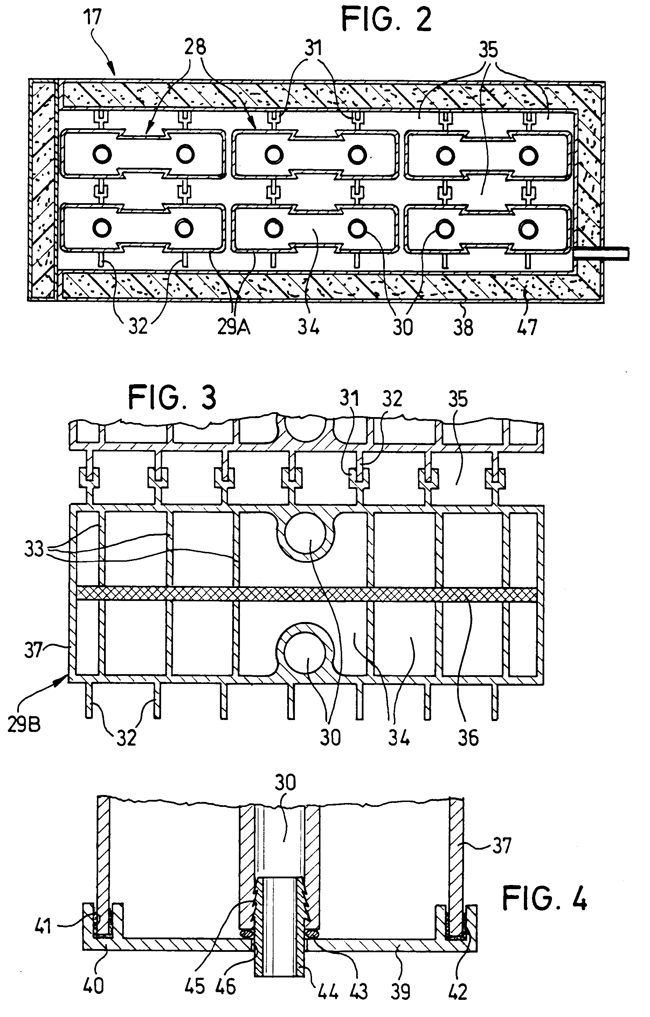

In Fig. 2 ist eine der Eisspeicher-Baueinheiten 17, 19, 21 im Querschnitt dargestellt. Als Bezugszahl wurde dabei exemplarisch die 17 verwendet. Dabei sind innerhalb einer umgebenden Gehäuse-Außenwand 38 und einer Isolierschicht 47 im Ausführungsbeispiel nebeneinander insgesamt sechs Eisspeicher-Elemente 28 angeordnet, deren Außenwand 37 jeweils von einem langgestreckten Profilkörper 29A begrenzt wird. Der Profilkörper ist vorzugsweise als Strangpressprofil aus Leichtmetall, wie beispielsweise Aluminium hergestellt und kann je nach Bedarf auf die benötigte Länge abgeschnitten werden. In den Querschnitt des Profilkörpers 29A sind zwei Kältemittelrohre 30 integriert, durch welche Kältemittel von der Zweig-Vorlaufleitung 16 zu den Eisspeicher-Baueinheiten und somit zu den darin angeordneten Eisspeicher-Elementen 28 strömt. Innerhalb einer Eisspeicher-Baueinheit 17, 19, 21 sind die Eisspeicher-Elemente 28 durch im Bereich der Stirnseiten angeordnete, nicht dargestellte Rohrbögen strömungsmäßig in Reihe und/oder parallel geschaltet.

Die Profilkörper 29A weisen an einer Außenwand 37 jeweils zwei gabelförmige Rippen 31 und an der gegenüberliegenden Wand stegförmige Rippen 32 auf. Dabei ist die am vorderen Ende einer gabelförmigen Rippe 31 gebildete Aufnahmenut zur Aufnahme einer stegförmigen Rippe 32 eines benachbarten Eisspeicher-Elements 28 vorgesehen. Durch den formschlüssigen Eingriff der Rippen 31 bzw. 32 ineinander lassen sich beliebig große, modular aufgebaute Eisspeicher-Baueinheiten aus beliebig vielen Eisspeicher-Elementen 28 in einer selbsttragenden Strukur zusammensetzen. Dabei können im Bereich der Rippen 31 bzw. 32 zusätzliche Verbindungselemente, wie Klipse, Querverschraubungen oder Kleberaupen vorgesehen sein.

Aus den Querschnittsdarstellungen verschiedener Varianten von Eisspeicher-Elementen 28 gemaß den Figuren 3 - 9 wird deutlich, daß jeweils wenigstens ein, jedoch vorzugsweise mehrere Kältemittelrohre 30 in die verschieden gestalteten Profilkörper 29A, 29B, 29C, 29D, 29E, 29F integriert sind. Vorzugsweise von diesen Kältemittelrohren 30 ausgehend erstrecken sich mehrere Innenrippen 33 in das Innere der Profilkörper, in welchem wenigstens ein Speicherraum 34 zur Aufnahme eines Eisspeicher-Mediums ausgebildet ist. Als Eisspeicher-Medium kommt im einfachsten Falle Wasser in Frage. Dieses kann gegebenenfalls mit Zusätzen wie Salzen, Inhibitoren, Fungizid oder ähnlichem vermischt sein.

Gemaß einer alternativen Ausführungsform ist die Verwendung eines Gashydrats als Eisspeicher-Medium vorgesehen, wobei dessen Vorteil darin liegt, daß dieses beim Phasenübergang keine nennenswerte Volumenveränderung aufweist.

In den Fällen, in denen Wasser verwendet wird, wird die Volumenausdehnung beim Gefrieren durch einen Kompensator 36 aufgefangen, der exemplarisch in den Figuren 3 und 5 - 7 dargestellt ist. Ein solcher Kompensator 36 kann beispielsweise von einem luftgefüllten Schlauch oder auch von einem geschlossenzelligen Schaumstoff gebildet werden, der entsprechend kompressibel ist. Wie aus den Figuren 3 und 5 - 7 ersichtlich, wird das volumen-kompensierende Element 36 vorzugsweise zwischen die Innenrippen 33 eingesetzt und von diesen in seiner Position gehalten.

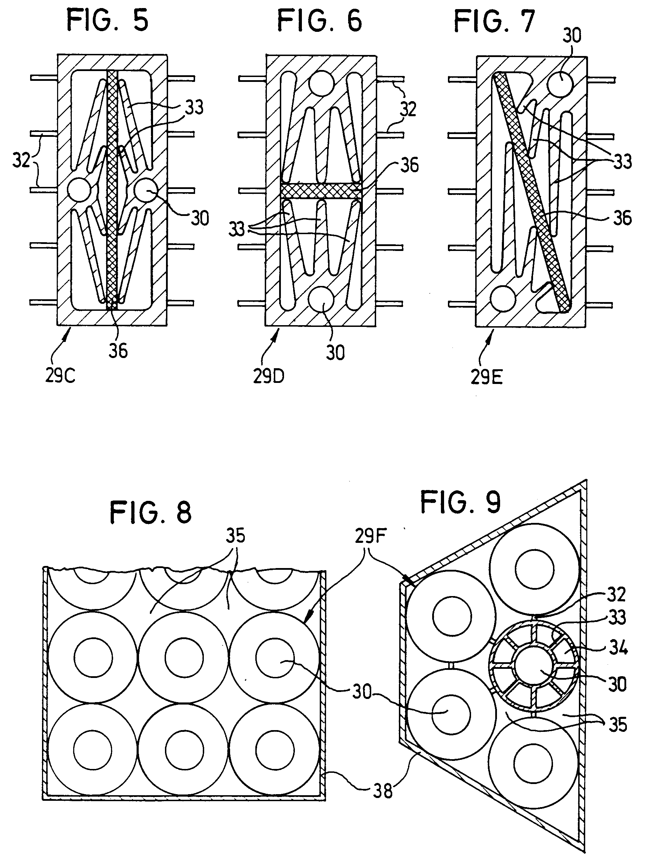

Die Innenrippen können verschiedene Formen aufweisen. Je nach dem, ob die Kältemittelrohre 30 bei einem rechteckigen Querschnitt der Außenwände 37 der Profilkörper 29 etwa in der Mitte der langen Seiten (Fig. 5), etwa in der Mitte der kurzen Seiten (Fig. 6) oder in den Eckbereichen (Fig. 7) angeordnet sind, weisen die Innenrippen 33 eine unterschiedlich geformte und sich in unterschiedliche Richtungen erstreckende fingerförmige Gestalt auf. Die Innenrippen 33 dienen dazu, das in den dazwischenliegenden Speicherräumen 34 befindliche Eisspeicher-Medium in kurzer Zeit gleichmäßig und vollständig durchzugefrieren. Umgekehrt dient beim Abtauen des Eisspeichers die Innenrippenstruktur dazu, in relativ kurzer Zeit eine hohe Kühlleistung zur Außenwand 37 der Eisspeicher-Elemente 28 zu fördern, wo sie von der durch Luftkanäle 35 geführten Luft aufgenommen wird. Die Luftkanäle 35 befinden sich bevorzugt in den von den Außenrippen 31 bzw. 32 begrenzten Zwischenräumen zwischen den Eisspeicher-Elementen 28.

An der Ober- und Unterseite sind die Profilkörper 29A bis 29F mittels eines an die Form des Profilteils angepaßten Bodenteils 39 verschlossen, wobei sich - wie in Fig. 4 dargestellt - ein Dichtrand 40 des Bodenteils 39 beispielsweise formschlüssig um die Außenwand 37 des Profilkörpers 29 legt und dort in der durch einen doppelten Rand des Dichtrandes gebildeten Nut 41 mittels Klebstoff 42 oder aber auch durch Schweißen oder Löten befestigt wird. Zur Verbindung der Kältemittelrohre 30 mit den von der Zweig-Vorlaufleitung 16 abzweigenden Vorlaufleitungen für das Kältemittel bzw. mit den Rücklaufleitung 22 ist in wenigstens einem der Bodenteile 39 wenigstens eine Bohrung oder Aussparung 46 vorgesehen, durch die ein Anschlußstutzen 44 der Kältemittelleitungen in das Kältemittelrohr 30 eingeführt wird. Die Abdichtung und Befestigung erfolgt dabei bevorzugt mittels einer flexiblen Dichtverzahnung 45 am Anschlußstutzen 44 und/oder einer zusätzlichen Abdichtung mittels eines O-Ringes 43 oder Dichtmittels an den Stirnseiten der Kältemittelrohre 30.

In den Figuren 8 und 9 sind abweichend von den vorangehenden Ausführungsbeispielen Eisspeicher-Elemente 28 gezeigt, bei denen die Profilkörper 29F einen kreisförmigen Querschnitt aufweisen. In diesem Falle bietet es sich an, wie an einem der Profilkörper in der Fig. 9 gezeigt ist, ein einziges zentral angeordnetes Kältemittelrohr 30 in den Profilkörper zu integrieren, von dem aus sich radial verlaufende Innenrippen 33 unter Bildung von dazwischenliegenden Speicherräumen 34 nach außen zur Außenwand 37 erstrecken. Die zylindrischen Profilkörper 29F lassen sich, wie in den Figuren 8 und 9 erläutert, in unterschiedlicher Weise aneinanderfügen, wobei in den Zwischenräumen im ersten Falle Luftkanäle 35 in der Form eines sphärischen Vierecks und im Fall der Fig. 9 eines sphärischen Dreiecks entstehen.

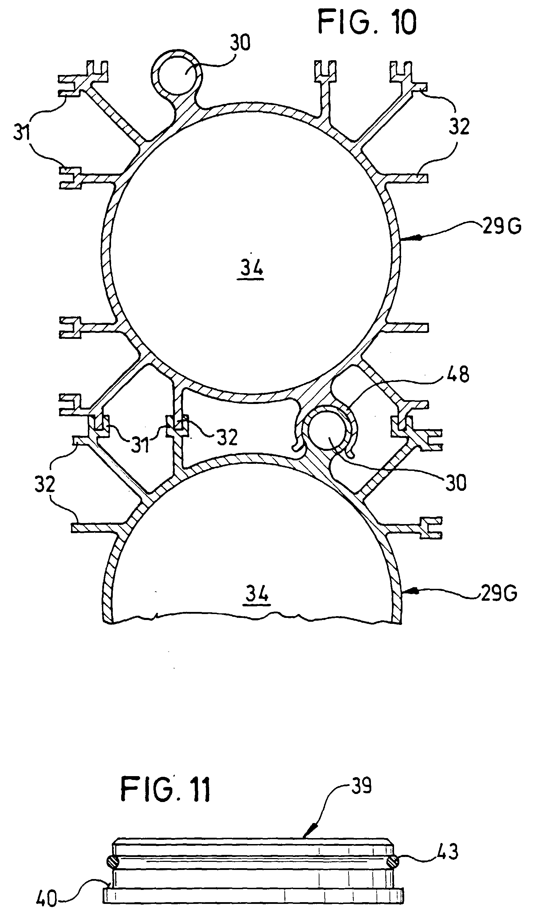

In Fig. 10 und 11 ist eine weitere Variante eines Eisspeicher-Elements 28 gezeigt, bei der ein Profilkörper 29G einen zentralen rohrförmigen Teil als Speicherraum 34, wenigstens ein am Außenumfang angeordnetes, einstückig damit verbundenes Kältemittelrohr 30 und mehrere vorzugsweise jeweils an zwei aneinander angrenzenden Seiten gleichartige Außenrippen mit Verbindungselementen aufweist. Die Verbindungselemente liegen dabei auf einer rechteckigen Hüllkurve des Profilkörpers 29G. Diagonal dem Kältemittelrohr 30 gegenüberliegend ist am Profilkörper 29G eine Steckverbindung 48 als offenes Profilteil vorgesehen, in das ein Kältemittelrohr 30 eines benachbarten Profilkörpers 29G axial oder radial eingesteckt werden kann. Durch die dargestellte Form des Profilkörpers 29G lassen sich durch wechselweises, umgekehrtes Zusammenstecken gleichartige Profile zur Herstellung beliebig großer Eisspeicher-Baueinheiten 17, 19, 21 verwenden. Der Wärmeübergang durch die Steckverbindung 48 sorgt für eine zusätzliche Abkühlung des Speicherraumes 34 des benachbarten Profilkörpers 29G.

Die Variante gemäß Fig. 10 läßt sich insbesondere bei einem Weglassen einer Innenverrippung mittels eines einfachen, rotationssymmetrischen Bodenteils 39 verschließen. Als Dichtflächen können dabei sowohl die Mantelfläche, ggfs. mit einem zusätzlichen, in eine Nut eingesetzten O-Ring 43, oder auch der als vorspringender Bund geformte Dichtrand 40, ggfs. mit zusätzlichen Dichtmitteln dienen.

Die Befestigung kann, wie bereits weiter oben beschrieben, mittels Schweißen, Löten, Kleben, Einpressen oder Verschrauben erfolgen.

Die rotationssymmetrische Ausbildung ermöglicht jedoch auch eine einfache Integration eines Volumenausgleich-Elements nach Art eines Kolbens oder eines in das Bodenteil 39 integrierten elastischen Körpers.

Unabhängig von der gewählten Profilform der Profilkörper 29 können mittels der Erfindung aufgrund der großen Oberflächen und des metallischen Materials gute Wärmeübergänge mit kurzen Durchfrierlängen erreicht werden. Dadurch können kurze Ladezeiten der Eisspeicher-Baueinheiten 17, 19, 21 erreicht werden und bei Bedarf auch relativ hohe Kühlleistungen. Im Gegensatz zu den bekannten Kunststoff-Profilkörpern erfolgt keinerlei Verformung des Rohrprofils. Die Eisspeicher-Elemente sind bei Verwendung von Aluminium-Strangpressprofilen sehr leicht, haben eine hohe Wärmeleitung, ermöglichen nahezu beliebige Verrippungsstrukturen, optimale Wärmeübergänge und Kälteleistungen und schließlich den Aufbau modularer selbsttragender Eisspeicher-Baueinheiten. Die Fertigung wird somit deutlich einfacher und kostengünstiger.

### Bezugszeichenliste

- 1: Lastkraftwagen
- 2: Fahrerkabine
- 3: Dach
- 4: Rückwand
- 5: (horizontale) Trennwand
- 6: Schlafkabine
- 7: Motorraum
- 8: Krompressor
- 9: Magnetkupplung
- 10: Verflüssiger
- 11: Vorlaufleitung
- 12: Sammler
- 13: Verdampfer
- 14: Rücklaufleitung
- 15: Umschaltventil
- 16: Zweig-Vorlaufleitung
- 17: Eisspeicher-Baueinheit
- 18: Zweigleitung
- 19: Eisspeicher-Baueinheit
- 20: Zweigleitung
- 21: Eisspeicher-Baueinheit
- 22: Rücklaufleitung
- 23: Aufnahmeraum
- 23A: Eintritt (zu 23)
- 23B: Austritt (zu 23)
- 24: Zwischenwand
- 25: Gebläse
- 26: Absperrorgan
- 27: Rückschlagventil
- 28: Eisspeicher-Element
- 29A,B,C,D,F,G: Profilkörper
- 30: Kältemittelrohr
- 31: gabelförmige Rippe
- 32: stegförmige Rippe
- 33: Innenrippe
- 34: Speicherraum
- 35: Luftkanal
- 36: Kompensator
- 37: Außenwand (von 29)
- 38: Außenwand (von 17, 19, 21)
- 39: Bodenteil
- 40: Dichtrand
- 41: Nut
- 42: Klebstoff
- 43: O-Ring
- 44: Anschlußstutzen
- 45: Dichtverzahnung
- 46: Bohrung
- 47: Isolierschicht
- 48: Steckverbindung

## Patentansprüche

1. Eisspeicher-Element (28) mit einem von einer Außenwand (37) umgebenen Profilkörper (29A, 29B, 29C, 29D, 29E, 29F) zur Bildung wenigstens eines Speicherraums (34) für ein Eisspeicher-Medium, das in wärmetauschende Verbindung mit einem Kältemittel bringbar ist, **dadurch gekennzeichnet**, daß in den aus Metall gebildeten Profilkörper (29A, 29B, 29C, 29D, 29E, 29F) wenigstens ein Kältemittelrohr (30) integriert ist.

2. Eisspeicher-Element nach Anspruch 1, **dadurch gekennzeichnet**, daß der Profilkörper (29A, 29B, 29C, 29D, 29E, 29F) als Strangpreßprofil ausgebildet ist.

3. Eisspeicher-Element nach Anspruch 1 oder 2, **dadurch gekennzeichnet**, daß sich vom Kältemittelrohr (30) Innenrippen (33) in den Speicherraum (34) hinein erstrecken.

4. Eisspeicher-Element nach einem der vorhergehenden Ansprüche, **dadurch gekennzeichnet**, daß der Profilkörper (29A, 29B, 29C, 29D, 29E, 29F) wenigstens zwei Kältemittelrohre (30) in einer achsensymmetrischen Anordnung aufweist.

5. Eisspeicher-Element nach einem der vorhergehenden Ansprüche, **dadurch gekennzeichnet**, daß sich von der Außenwand (37) des Profilkörpers (29A, 29B, 29C, 29D, 29E, 29F) Außenrippen (31, 32) erstrecken, die zumindestens teilweise zur Begrenzung von Luftkanälen (35) dienen.

6. Eisspeicher-Element nach Anspruch 5, **dadurch gekennzeichnet**, daß die Außenrippen (31, 32) Verbindungselemente zur Verbindung mit benachbarten Eisspeicher-Elementen (29A, 29B, 29C, 29D, 29E, 29F) aufweisen.

7. Eisspeicher-Element nach Anspruch 6, **dadurch gekennzeichnet**, daß die Außenrippen zum einen Teil als stegförmige Rippen (32) und zu einem anderen Teil als gabelförmige Rippen (31) ausgebildet sind, die jeweils paarweise mit den Rippen (31, 32) eines benachbarten Eisspeicher-Elements (29A, 29B, 29C, 29D, 29E, 29F) in Eingriff bringbar sind.

8. Eisspeicher-Element nach einem der vorhergehenden Ansprüche, **dadurch gekennzeichnet**, daß dieses bei einer Befüllung mit einem sich beim Phasenübergang ausdehnenden Eisspeicher-Medium wenigstens ein volumen-kompensierendes Element (36) umfaßt.

9. Eisspeicher-Element nach Anspruch 8, **dadurch gekennzeichnet**, daß das volumenkompensierende Element als luftgefüllter Hohlkörper oder geschlossenzelliger Schaumkörper ausgebildet ist.

10. Eisspeicher-Element nach einem der vorhergehenden Ansprüche, **dadurch gekennzeichnet**, daß der Profilkörper (29A, 29B, 29C, 29D, 29E, 29F) stirnseitig von Bodenteilen (39) verschlossen wird, die mit der Außenwand (37) durch Schweißen, Löten, Kleben, Verschrauben oder Verpressen verbunden sind.

11. Eisspeicher-Element nach Anspruch 10, **dadurch gekennzeichnet**, daß in wenigstens einem Bodenteil (39) eine Bohrung/Aussparung (46) oder ein Anschlußstutzen für den Durchtritt des Kältemittels zum Kältemittelrohr (30) vorgesehen ist.

12. Eisspeicher-Element nach einem der vorhergehenden Ansprüche, **dadurch gekennzeichnet**, daß als Eisspeicher-Medium ein Gashydrat verwendet wird.
